# DEMANDE DE BREVET EUROPEEN

(11) **EP 0 974 768 A1**
(43) Date de publication de la demande: **26.01.2000**
(21) Numéro de dépôt: 99401838.0
(22) Date de dépôt: 21.07.1999
(51) Int. Cl.: F16F 1/36, F16F 15/08

(54) **Coussin amortisseur et structure équipée d'un tel coussin**

(30) Priorité: 22.07.1998 FR 9809538
(71) Demandeur: Grizot, Gérard, 49300 Cholet (FR)
(72) Inventeur: Grizot, Gérard, 49300 Cholet (FR)
(74) Mandataire: Le Brusque, Maurice

(57) **Abrégé**

Ce coussin amortisseur (1) est adapté pour amortir le choc d'un objet ou d'une partie du corps contre une structure de réception rigide.
Ce coussin est réalisé en matériau moulable d'une dureté comprise entre 12 et 45 shore A. Il est constitué embase (2) sur l'une des faces de laquelle est destinée à venir en appui ledit objet ou ladite partie du corps que l'on désire protéger; et son autre face (2') s'étend une pluralité de papilles compressibles monoblocs (3), disposées les unes à côté des autres pour former une nappe, certaines au moins desdites papilles (3) comportant un creux interne (4) de section constante ou en dépouille, aménagé à partir de leur extrémité.

## Description

La présente invention concerne un coussin amortisseur susceptible d'être utilisé comme structure de confort dans de nombreux domaines techniques, par exemple dans l'industrie de la chaussure ou de la sellerie.

Les coussins amortisseurs sont en règle générale constitués de structures à air ou en mousse qui ne sont pas toujours faciles à fabriquer ou à mettre en oeuvre. Bien souvent aussi, ces structures n'offrent pas de grandes possibilités de variation ou d'évolution pour obtenir différentes caractéristiques de compressibilité.

La présente invention propose une structure originale de coussin de confort efficace, susceptible d'être facilement adapté pour obtenir les caractéristiques de compressibilité désirées, et de surcroît simple à réaliser.

Le coussin amortisseur conforme à l'invention est adapté pour amortir le choc d'un objet ou d'une partie du corps contre une structure rigide. Ce coussin est réalisé en matériau moulable d'une dureté comprise entre 12 et 45 shore A ; il est constitué d'une embase sur l'une des faces de laquelle est destiné à venir en appui ledit objet ou ladite partie du corps que l'on désire protéger et à partir de l'autre face de laquelle s'étend une pluralité de papilles compressibles monoblocs disposées les unes à côté des autres pour former une nappe, certaines au moins desdites papilles comportant un creux interne de section constante ou en dépouille, aménagé à partir de leur extrémité, ladite extrémité venant s'appliquer contre ladite structure rigide.
On adopte la nature du matériau moulable, la structure des papilles, leurs dimensions et leur répartition, en fonction des caractéristiques et des qualités d'amortissement désirées.

La forme géométrique des papilles et celle de leur creux interne peuvent être quelconques. De préférence cependant, ces papilles sont :
- en forme de dôme avec un creux interne cylindrique,
- de forme cylindrique avec un creux interne cylindrique, ou encore
- de forme polygonale avec un creux interne de section polygonale.
On peut aussi utiliser une combinaison de ces différentes structures.

Selon une autre caractéristique de l'invention, le coussin amortisseur comporte une pluralité de lignes parallèles de papilles, lesdites papilles étant écartées d'un pas constant p sur chaque ligne et étant décalées d'un demi-pas d'une ligne sur l'autre.

Selon une forme de réalisation particulière, l'embase comporte une face concave à partir de laquelle s'étendent les papilles compressibles, l'extrémité de toutes les papilles se situant dans le même plan.

Selon une autre caractéristique de l'invention, les papilles qui sont situées sur la périphérie de la nappe compressible sont pleines, dépourvues de creux interne.

Selon encore une autre caractéristique, le coussin comporte un rebord périphérique monobloc qui ceinture la nappe de papilles et qui lui sert de structure d'assise.

L'invention concerne aussi la structure générale munie d'une zone d'amortissement constituée d'un coussin amortisseur tel que défini ci-dessus. Cette structure peut être réalisée en matériau moulable, le coussin amortisseur étant obtenu de façon monobloc ; le coussin peut aussi être solidarisé avec la structure de réception par une opération de surmoulage, par encastrement ou encore par collage.

L'invention va maintenant être illustrée, sans être aucunement limitée, par la description suivante de plusieurs modes de réalisation, donnés uniquement à titre d'exemples et représentés sur les dessins annexés, dans lesquels :
- la figure 1 est une vue en perspective d'un coussin amortisseur conforme à l'invention, avec des papilles en forme de dôme ;
- la figure 2 est une vue de dessous du coussin de la figure 1, montrant la répartition des papilles ;
- la figure 3 est une vue de l'une des papilles du coussin des figures 1 et 2, en coupe transversale ;
- la figure 4 montre la papille de la figure 3 en phase de compression axiale ;
- la figure 5 montre la papille de la figure 3 en phase de compression après désaxage ;
- la figure 6 est une coupe transversale d'une autre forme de réalisation possible de papille ;
- la figure 7 est une vue en coupe transversale d'un autre mode de réalisation possible du coussin amortisseur, avec des papilles polygonales ;
- la figure 8 est une vue de dessous d'une portion du coussin de la figure 7 ;
- la figure 9 est une vue en perspective d'une autre forme de réalisation possible du coussin amortisseur, vu de dessous, avec des papilles cylindriques ;
- la figure 10 est une vue agrandie du coussin de la figure 9, en coupe transversale ;
- la figure 11 est une vue en perspective montrant le dessus du coussin des figures 9 et 10 ;
- la figure 12 illustre une variante de réalisation du coussin des figures 9 à 11.

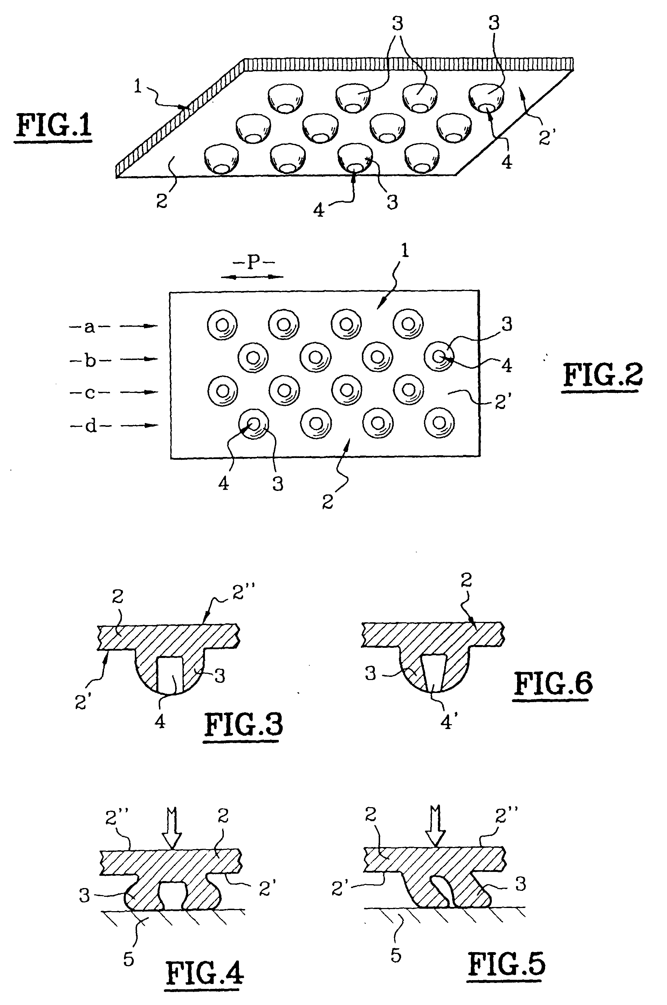

Le coussin amortisseur 1 illustré sur les figures 1 à 5, est constitué d'une embase 2 à partir de la face inférieure 2' de laquelle s'étend une pluralité de papilles monoblocs 3 ayant chacune la forme d'un dôme, avec un creux interne cylindrique 4. Le creux interne 4 est positionné sur l'axe des papilles 3 ; il s'étend sur la majeure partie de la hauteur desdites papilles et il débouche au niveau de leur extrémité.

Ce coussin amortisseur 1 est réalisé par moulage d'un matériau souple et/ou compressible ayant une dureté comprise entre 12 et 45 shore A et les papilles 3 ont ainsi la possibilité de se déformer sous l'effet d'une pression, pour assurer une fonction d'amortissement.

On peut par exemple utiliser une matière de type silicone, polyuréthane, caoutchouc ou polyester.

L'amortissement sous l'effet d'une pression sur la face supérieure 2" de l'embase 2 est obtenu par une compression axiale des papilles contre un support rigide 5 (figure 4) et/ou par compression après désaxage (figure 5). L'objet ou la partie du corps humain qui exerce cette pression vient en appui sur l'embase 2 qui forme une pièce intermédiaire permettant d'obtenir un confort de contact intéressant.

Les différentes papilles 3 disposées les unes à côté des autres, forment une nappe d'amortissement dont les caractéristiques de compressibilité sont fonction du matériau utilisé, de la forme externe des papilles, de la forme de leur creux interne, de leur hauteur et de leur répartition.

Le creux interne 4 aménagé dans les papilles permet d'obtenir des caractéristiques de compressibilité importantes, tout en utilisant un matériau résistant ayant une bonne tenue dans le temps.

Sur la figure 2, on remarque que la nappe d'amortissement est constituée de papilles 3 réparties de façon homogène en quinconce. Les papilles 3 sont disposées en lignes parallèles a, b, c, ... ;sur chaque ligne elles sont séparées d'un pas constant p et d'une ligne sur l'autre elles sont décalées d'un demi-pas. En outre, les différentes lignes a, b, c ... sont séparées par une distance correspondant à un demi-pas.

Ce type de coussin permet d'obtenir un amortissement efficace lors d'une pression exercée sur l'embase 2 par contact et appui libre de l'extrémité des papilles sur le support récepteur 5.

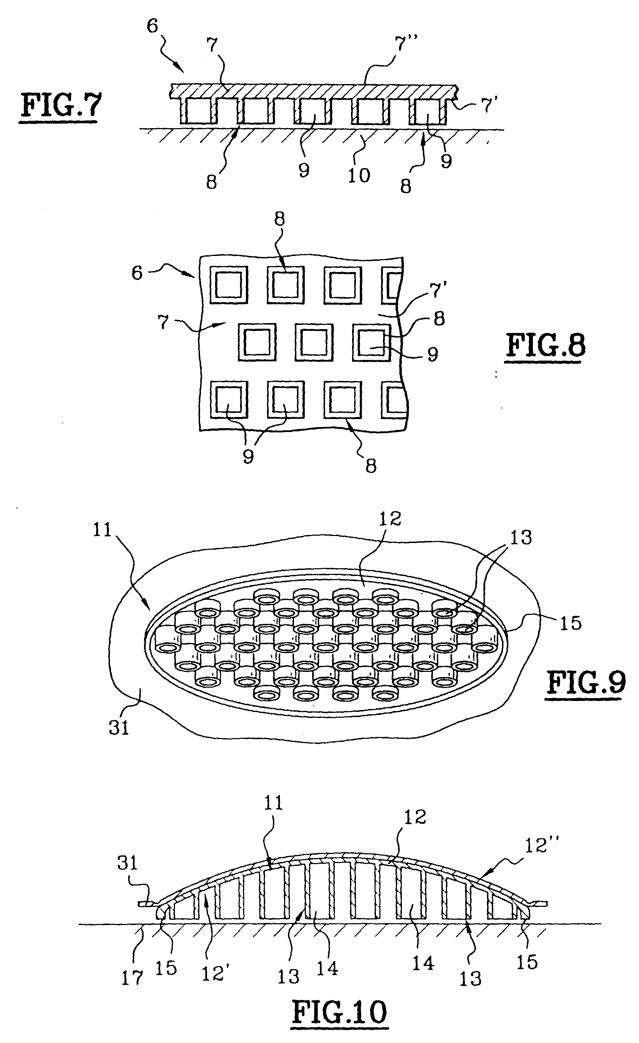

On a représenté sur la figure 6 une variante de réalisation des papilles en dôme 3 dans laquelle le creux interne 4' est réalisé en dépouille. Cette variante, réalisable par moulage du fait qu'on utilise un matériau souple et/ou compressible, permet d'obtenir des caractéristiques de compressibilité et d'écrasement similaires à celles du mode de réalisation des figures 1 à 5.

Les figures 7 à 12 illustrent d'autres modes de réalisation du coussin amortisseur conforme à l'invention. Ces coussins sont également réalisés par moulage d'un matériau souple et/ou compressible d'une dureté comprise entre 12 et 45 shore A ; ils se distinguent de l'exemple de réalisation des figures 1 à 6 en particulier par la forme des papilles et/ou par la structure de l'embase.

Le coussin amortisseur 6 qui est illustré sur les figures 7 et 8 est constitué d'une embase 7 à partir de la face inférieure 7' de laquelle s'étendent des papilles d'amortissement tubulaires 8 dont la section transversale est carrée, avec une épaisseur de paroi constante. Les papilles 8 à section carrée sont munies d'un creux interne 9 également à section carrée, qui s'étend sensiblement sur toute leur hauteur.

L'extrémité des papilles 8 vient s'appliquer contre un support rigide de réception 10 ; elles ont la possibilité de se comprimer sur ledit support 10 sous l'effet d'une pression exercée par un objet ou une partie du corps contre la face supérieure 7" de l'embase 7.

Sur la figure 8, on remarque le positionnement régulier en quinconce des différentes papilles 8 sur la nappe d'amortissement.

Le coussin amortisseur 11 des figures 9, 10 et 11 est constitué d'une embase 12 en forme de dôme dont la face concave 12' est munie de papilles cylindriques 13 avec un orifice interne 14 également cylindrique. La hauteur des différentes papilles 13 est adaptée pour que leur extrémité se situe dans le même plan.
D'autre part, la nappe de papilles 13 est ceinturée par un rebord périphérique monobloc 15 qui sert à délimiter le coussin et qui forme une structure d'assise sur un support récepteur 17 (figure 10).

L'extrémité du rebord 15 s'étend dans le même plan que l'extrémité des différentes papilles 13. L'amortissement est obtenu par une pression sur la face supérieure 12" de l'embase 12 provoquant par déformation la compression des papilles 13 en appui sur le support récepteur 17.

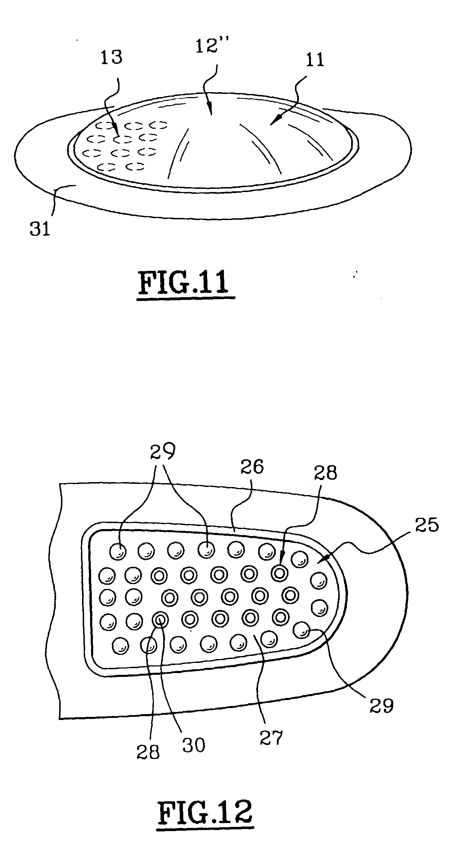

Sur le mode de réalisation de la figure 12, le coussin amortisseur 25, vu de dessous, est ceinturé par un rebord périphérique monobloc 26. Il est constitué d'une embase 27 munie de papilles cylindriques 28, 29. Les papilles centrales 28 comportent un orifice interne 30 également cylindrique alors que les papilles 29 situées sur la périphérie sont pleines, dépourvues d'orifice interne.
Cette particularité permet de bien délimiter les contours du coussin.

Le coussin amortisseur conforme à l'invention peut équiper toute structure de réception sur laquelle on désire aménager une zone d'amortissement.
A titre d'exemple, on peut utiliser cette structure de coussin dans le domaine de la chaussure, pour équiper une semelle, une première de montage ou même une première de propreté. Les coussins amortisseurs peuvent alors être positionnés au niveau du talon et/ou sur des zones de l'avant-pied constituant des points d'impact.

Dans le domaine de la sellerie, ce type de coussin amortisseur peut être utilisé pour recouvrir les structures d'assises, les accoudoirs ou autres ..., en lieu et place des panneaux de mousse compressible habituellement employés.

Le coussin moulable conforme à l'invention peut être confectionné ou solidarisé de différentes manières sur la structure qui le reçoit.
Dans le cas où cette structure de réception est réalisée en matériau moulable, on peut envisager de réaliser le coussin de façon monobloc lors de la préparation de ladite structure.
Si les matériaux sont compatibles, il est aussi possible de réaliser le coussin par une opération de surmoulage, comme on l'a représenté sur les figures 9 à 11. Sur ces différentes figures, en effet, le coussin amortisseur est surmoulé sur une peausserie 31, par exemple dans le but d'obtenir une première de propreté pour chaussures, munies de zones d'amortissement.
Il est aussi possible de positionner le coussin par simple encastrement sur la structure de réception, ou de le solidariser par collage.

Pour l'ensemble des modes de réalisation décrits on peut envisager de relier les différentes papilles entre elles par l'intermédiaire de minces parois déformables, en particulier pour améliorer la cohésion d'ensemble de la structure.

## Revendications

1. Coussin amortisseur adapté pour amortir le choc d'un objet ou d'une partie du corps contre une structure rigide, caractérisé en ce qu'il est réalisé en matériau moulable d'une dureté comprise entre 12 et 45 shore A, lequel coussin est constitué d'une embase (2, 7, 12, 27) sur l'une des faces de laquelle est destiné à venir en appui ledit objet ou ladite partie du corps que l'on désire protéger et à partir de l'autre face de laquelle s'étendent une pluralité de papilles compressibles monoblocs (3, 8, 13, 28-29) disposées les unes à côté des autres pour former une nappe, certaines au moins desdites papilles comportant un creux interne (4, 9, 14, 30) de section constante ou en dépouille, aménagé à partir de leur extrémité, ladite extrémité venant s'appliquer contre ladite structure rigide.

2. Coussin amortisseur selon la revendication 1, caractérisé en ce qu'il comporte des papilles (3) en forme de dôme avec un creux interne cylindrique (4).

3. Coussin amortisseur selon l'une quelconque des revendications 1 ou 2, caractérisé en ce qu'il comporte des papilles cylindriques (13, 28) avec un creux interne cylindrique (14, 30).

4. Coussin amortisseur selon l'une quelconque des revendications 1 à 3, caractérisé en ce qu'il comporte des papilles polygonales (8) avec un creux interne à section polygonale (9).

5. Coussin amortisseur selon l'une quelconque des revendications 1 à 4, caractérisé en ce qu'il comporte une pluralité de lignes parallèles a, b, c ... de papilles (3, 8), lesdites papilles (3, 8) étant écartées d'un pas constant p sur chaque ligne et étant décalées d'un demi-pas d'une ligne sur l'autre, l'écartement entre chaque ligne a, b, c ... correspondant également à un demi-pas.

6. Coussin amortisseur selon l'une quelconque des revendications 1 à 5, caractérisé en ce qu'il est constitué d'une embase (12) munie d'une face concave (12') à partir de laquelle s'étendent les papilles compressibles (13), l'extrémité de toutes les papilles (13) se situant dans le même plan.

7. Coussin amortisseur selon l'une quelconque des revendications 1 à 6, caractérisé en ce qu'il est constitué d'une nappe de papilles (28, 29), les papilles (29) qui sont situées sur la périphérie de la nappe étant pleines, dépourvues de creux interne.

8. Coussin amortisseur selon l'une quelconque des revendications 1 à 7, caractérisé en ce qu'il comporte un rebord périphérique monobloc (15, 26) qui ceinture la nappe de papilles et qui sert de structure d'assise.

9. Structure munie d'une zone d'amortissement constituée d'un coussin amortisseur (1, 6, 11, 25) selon l'une quelconque des revendications 1 à 8.

10. Structure selon la revendication 9, caractérisée en ce qu'elle est réalisée en matériau moulable et en ce qu'elle comporte un coussin amortisseur réalisé de façon monobloc.

11. Structure selon la revendication 9, caractérisée en ce qu'elle comporte un coussin amortisseur surmoulé.

12. Structure selon la revendication 9, caractérisée en ce qu'elle comporte un coussin amortisseur solidarisé par encastrement.

13. Structure selon la revendication 9, caractérisée en ce qu'elle comporte un coussin amortisseur solidarisé par collage.
